# FASCICULE DE BREVET EUROPEEN

(11) **EP 3 001 301 B1**
(45) Date de publication et mention de la délivrance du brevet: **25.04.2018**
(21) Numéro de dépôt: 15186704.1
(22) Date de dépôt: 24.09.2015
(51) Int. Cl.: G06F 3/0488

(54) **PROCEDE DE GESTION SPATIALE DE ZONES INTERACTIVES D'UNE TABLE TACTILE, TABLE TACTILE**
RÄUMLICHES STEUERUNGSVERFAHREN VON INTERAKTIVEN ZONEN EINES TOUCHTABLES, UND ENTSPRECHENDES TOUCHTABLE
METHOD FOR SPATIAL MANAGEMENT OF INTERACTIVE AREAS OF A TOUCH TABLE, TOUCH TABLE

(30) Priorité: 24.09.2014 FR 1459032
(43) Date de publication de la demande: 30.03.2016
(73) Titulaire: Virtual Sensitive, 60201 Compiegne Cedex (FR)
(72) Inventeur: CHATEAU, Fabien, 60200 COMPIEGNE (FR)
(74) Mandataire: Cabinet Camus Lebkiri

(56) Documents cités:
- EP-A1- 2 752 755
- WO-A1-2009/047155
- GB-A- 2 484 551
- JP-A- 2013 149 016
- US-A1- 2007 106 942
- US-A1- 2013 181 948
- US-A1- 2014 149 951

## Description

### DOMAINE

Le domaine de l'invention concerne les tables tactiles multi-utilisateurs. Plus précisément, l'invention concerne la gestion spatiale des zones interactives de l'écran tactile desdites pour une optimisation de l'usage multi-utilisateurs et une meilleure convivialité.

### ETAT DE L'ART

Il existe aujourd'hui des tables tactiles multi-utilisateurs. Ces tables présentent le plus souvent une forme rectangulaire ou carrée et dans une moindre mesure, une forme circulaire. Notamment, l'entreprise Virtual Sensitive commercialise des tables tactiles circulaires destinées à un usage multi-utilisateurs.

Les tables tactiles multi-utilisateurs actuelles ne permettent pas de gérer spatialement différentes actions d'une pluralité d'utilisateurs souhaitant évoluer dans différents environnements numériques. Plus précisément, elles ne permettent pas de gérer simultanément différents services ou différentes applications dédié(e)s à chaque utilisateur tout en assurant une cohérence des actions de chacun en minimisant les gênes causées entre utilisateurs. Le plus souvent, ces tables ne permettent pas une gestion optimale des droits des utilisateurs entre eux et certaines actions d'un utilisateur peuvent nuire ou causer un désagrément à d'autres utilisateurs. En outre, par le passé, il n'existait pas nécessairement un besoin de gérer différents contenus numériques à cause de la limitation des résolutions des tables tactiles existantes. En effet, la résolution des moyens de projection d'images utilisés dans les tables tactiles actuelles ne permettent pas d'afficher différents contenus sur une grande surface pour assurer une convivialité d'un usage multi-utilisateurs. Il n'existe pas de solution compacte, c'est-à-dire une table comprenant l'intégralité des composants assurant son fonctionnement pour un véritable usage multi-utilisateurs avec une gestion d'applications et de services dédiés à chacun. Lorsque c'est le cas, les tables existantes offrent un compromis au détriment d'une finesse de détails pour chaque utilisateur. C'est pour cette raison, que, généralement, un unique contenu multimédia est proposé à une pluralité d'utilisateurs. Le document JP 2013 149016 décrit une table interactive multi-utilisateurs permettant de manipuler des fenêtres sans partitionner l'écran. Le problème technique non résolu par l'art antérieur est de proposer une table multi-utilisateurs offrant un maximum de convivialité et permettant l'accès à différents espaces dédiés simultanément pour chaque utilisateur. Un problème est d'offrir une gestion spatiale des éléments multimédias générés et affichés par la table tout en assurant à chaque utilisateur un minimum de désagréments causés par les actions des autres utilisateurs.

### RESUME DE L'INVENTION

L'invention est définie par la revendication 1 et vise à pallier les inconvénients précités.

Un objet de l'invention concerne un procédé de gestion spatiale d'une pluralité de zones interactives, sur un écran tactile d'une table destinée à des usages multi-utilisateurs, chacune des zones définissant «un environnement numérique dédié » pour un utilisateur et une frontière, lesdites zones s'affichant lors de l'activation d'une commande tactile et pouvant être déplacées et agrandies sur ledit écran tactile par une action tactile. Le procédé permet ainsi de réaliser une fonction d'anticollision et comprend :
▪ Une détection d'un déplacement d'une frontière d'au moins une zone interceptant au moins la frontière d'une autre zone au moyen d'un calculateur couplé à un moyen de capture d'image;
▪ Une génération d'une consigne d'arrêt du déplacement de ladite frontière assurant la non- superposition des zones entre elles par le calculateur.

Un avantage de l'invention est de permettre différentes utilisations simultanées de la table tactile par une pluralité d'utilisateurs tout en limitant les gênes occasionnées par les actions des utilisateurs entre eux.

Selon un mode de réalisation, un environnement numérique dédié comprend un ensemble d'applications et/ou de documents numériques, lesdites applications ou lesdits documents numériques étant activables par une action tactile, lesdites applications produisant des ensembles de données d'intérêt s'affichant sur lesdites zones, lesdits documents numériques ou les ensembles de données d'intérêt étant appelés « documents».

Un avantage est d'offrir de nombreuses possibilités d'utilisation de la table tactile telles que par exemple des jeux, des applications culturelles ou de découvertes d'un environnement, comme par exemple une application permettant de découvrir un produit, un service ou une entreprise. En outre, le procédé de l'invention permet de consulter et éditer des documents numériques de tout type tels que des médias ou des documents textuels. En outre, la table tactile permet de naviguer sur le WEB, de consulter des pages, de les étiqueter et de les éditer.

Un autre objet de l'invention concerne un procédé de gestion spatiale d'une pluralité de zones interactives, sur un écran tactile d'une table destinée à des usages multi-utilisateurs, chacune des zones définissant «un environnement numérique dédié » pour un utilisateur et une frontière, lesdites zones s'affichant lors de l'activation d'une commande tactile et pouvant être déplacées et agrandies sur ledit écran tactile par une action tactile. Le procédé permet ainsi de réaliser une fonction d'acceptation mutuelle et comprend :
▪ Un premier mode d'interactivité comprenant un affichage d'au moins deux zones permettant aux utilisateurs d'accéder individuellement à un environnement numérique ;
▪ Un second mode d'interactivité comprenant un affichage plein écran d'une zone permettant aux utilisateurs d'accéder au même environnement numérique ;
▪ Une étape d'activation générant le passage du premier mode d'interactivité au second mode d'interactivité.

Un avantage est de permettre de basculer d'un mode à l'autre pour permettre à une pluralité d'utilisateurs de partager le même contenu ou la même application lorsqu'une application multi-utilisateurs ou qu'un contenu à partager peut être communément utilisé.

Le procédé de gestion spatiale réalisant la fonction d'anticollision et le procédé de gestion spatiale réalisant la fonction d'acceptation mutuelle peuvent être combinés selon tous les modes de réalisation de l'invention.

Selon un mode de réalisation, l'étape d'activation du procédé de gestion spatiale comprend:
▪ Une détection d'une commande d'activation du second mode d'interactivité dans au moins une première zone ;
▪ Une génération d'une fenêtre d'acceptation sur une pluralité de secondes zones ;
▪ Une détection d'un ensemble d'actions d'acceptation, chacune étant générée dans chaque seconde zone ;
▪ Un affichage plein écran de la première zone lorsque le nombre d'actions d'acceptation correspond au nombre de secondes zones affichées.

Un avantage est de permettre à chaque utilisateur de choisir quel mode il souhaite opérer. Il peut refuser ou accepter une invitation à partager une application ou un document. Chaque utilisateur peut faire la demande auprès des autres utilisateurs à n'importe quel instant sans perturber les actions de chacun.

Selon un mode de réalisation, une position de référence de chaque zone sur l'écran tactile est mémorisée dans une mémoire lors d'un passage du premier mode d'interactivité au second mode d'interactivité.

Selon un mode de réalisation, une fenêtre interactive est affichée à chaque position de référence, ladite fenêtre interactive étant générée selon la nature de l'application activée de la première zone.

Selon un mode de réalisation, chaque zone est affichée à chaque position de référence lors d'un passage du second mode d'interactivité au premier mode d'interactivité.

Un avantage est de faciliter les allers-et-retours d'un mode à l'autre, tout en prenant en considération la position de l'utilisateur autour de la table.

Un autre objet de l'invention concerne un procédé de gestion spatiale d'une pluralité de zones interactives, sur un écran tactile d'une table destinée à des usages multi-utilisateurs, chacune des zones définissant «un environnement numérique dédié » pour un utilisateur et une frontière, lesdites zones s'affichant lors de l'activation d'une commande tactile et pouvant être déplacées et agrandies sur ledit écran tactile par une action tactile. Le procédé permet ainsi de réaliser une fonction de partage et comprend lorsqu'une action tactile est engagée sur un document affiché d'une première zone: la génération d'un bouton dans ladite première zone, appelé bouton de partage, l'actionnement dudit bouton de partage engageant une extraction d'une copie du document de ladite première zone, ladite copie du document s'affichant sous forme d'une icône graphique à une position ancrée à la périphérie de la première zone et étant solidaire des mouvements de la frontière de ladite première zone.

Le procédé de gestion spatiale réalisant la fonction de partage peut se combiner dans tous les modes de réalisation avec le procédé de gestion spatiale réalisant la fonction d'anticollision et/ou le procédé de gestion spatiale réalisant la fonction d'acceptation mutuelle.

Selon un mode de réalisation, une action tactile sur une icône graphique, correspondante à un document extrait, détectée par le moyen de capture d'images couplé au calculateur, engage :
▪ soit un affichage du document extrait sur au moins une autre zone affichée ;
▪ soit un affichage du document sur une portion neutre de l'écran tactile, ladite portion neutre étant située dans un espace de l'écran ne comprenant pas l'affichage de zones.

Selon un mode de réalisation, une action tactile sur le document affiché sur une portion neutre de l'écran tactile génère un bouton de partage du document permettant :
▪ Soit de transférer ledit document dans au moins une zone affichée ;
▪ Soit d'effectuer une copie du document affiché dans une portion neutre dans une zone interactive.

Un avantage de la fonction de partage est de rendre la table tactile complètement interactive et de la rendre conviviale. Un intérêt est de respecter l'environnement numérique de chaque utilisateur tout en favorisant des possibilités d'interactions entre utilisateurs. Ces dernières sont par exemple idéales pour passer d'un stade de travail individuel à un travail collectif. Cette fonction de partage facilite par exemple un travail collaboratif.

Selon un mode de réalisation, l'environnement numérique d'une zone interactive comprend des outils d'édition numériques permettant de modifier un document.

Selon un mode de réalisation, l'environnement numérique d'une zone interactive comprend un état d'affichage permettant de générer des icônes graphiques permettant d'activer chaque application ou d'ouvrir des documents par une action tactile détectée par un moyen de capture d'images couplé à un calculateur, ledit état d'affichage comprenant une adaptation du nombre d'icônes graphiques représentées en fonction des dimensions de la zone interactive.

Selon un mode de réalisation, la détection d'une action tactile comprend un agrandissement, un déplacement, une fermeture ou un rétrécissement d'au moins une zone.

Selon un mode de réalisation, l'ensemble des actions générées sont réalisées suite à :
▪ au moins un toucher tactile à la surface de l'écran ou ;
▪ une combinaison de toucher dans un espace de temps donné ou ;
▪ un déplacement d'au moins un toucher sur la surface de l'écran.

Selon un mode de réalisation, l'écran tactile et les zones interactives sont circulaires, rectangulaires ou carrés.

Un autre objet de l'invention concerne une table tactile circulaire comprenant un écran, un moyen de projection affichant au moins un contenu multimédia sur ledit écran, des moyens d'émission d'un faisceau lumineux projeté dans un plan parallèle à l'écran permettant d'intercepter des points d'interactions, un calculateur et un moyen de capture d'images permettant de détecter les positions de points d'interaction. En outre, la table met en oeuvre le procédé de gestion spatiale d'une pluralité de zones interactives de l'invention.

Un avantage d'une telle table est de présenter une zone d'interaction circulaire multi-utilisateurs présentant une convivialité d'usage tout en assurant une détection performante pour des usages quel que soit la luminosité ambiante.

En outre, une telle table circulaire est idéale pour des applications favorisant la convivialité entre utilisateurs dans des lieux publics ou par exemple dans des salons, halls d'accueil, salles de réunion ou des offices de tourisme.

Selon un mode de réalisation, lorsque le second mode est activé, une consigne tactile de déplacement de la zone affichée engage la rotation de la zone autour du centre de l'écran. Selon ce mode de réalisation, l'angle de rotation de la zone affichée en plein écran peut être, par exemple, calculé à partir d'une mesure d'un déplacement détecté d'une action tactile effectuée sur une portion de la périphérie de la table.

Un autre objet de l'invention concerne un procédé d'administration d'une table tactile, ladite table comprenant une interface tactile pour accéder à différents environnements numériques, chaque environnement numérique étant dédié à un utilisateur, chaque environnement comprenant un ensemble d'applications et/ou de documents numériques, lesdites applications produisant des ensembles de données d'intérêt s'affichant sur ladite table tactile, ladite table comprenant en outre un composant réseau pour identifier et accéder à un système d'exploitation de la table. Le procédé comprend en outre :
▪ une authentification d'un individu à un serveur web distant au moyen d'une interface web, une adresse URL permettant d'accéder au serveur web via un réseau de communication, ladite authentification s'effectuant au moyen d'un login et d'un mot de passe ;
▪ une génération d'une interface d'administration d'au moins une table tactile sur l'interface web consécutive à l'authentification ;
▪ une activation d'un ensemble d'applications disponibles sur l'au moins une table tactile, l'activation générant des données d'activation ;
▪ un paramétrage d'un ensemble de données de contextes comprenant des données décrivant un environnement graphique de l'interface de la table tactile et/ou des données de cartographies accessible sur la table tactile et/ou des documents numériques dédiés à une population donnée ;
▪ une mémorisation des données d'activation et de paramétrage dans une mémoire d'au moins une table tactile.

Avantageusement, le procédé d'administration de l'invention s'appliquer à une table tactile de l'invention.

### BREVE DESCRIPTION DES FIGURES

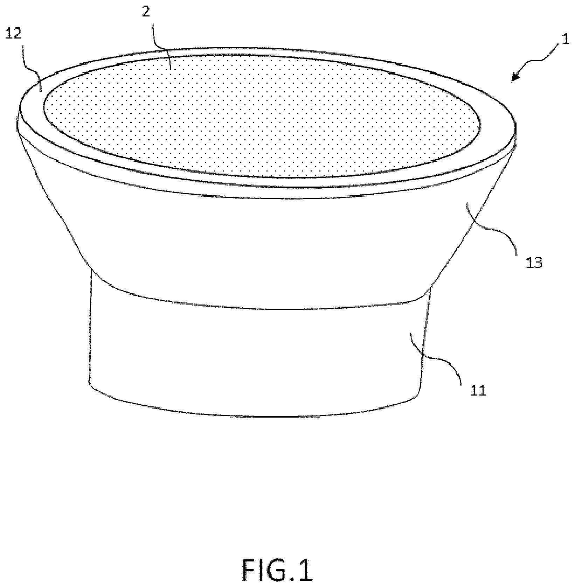

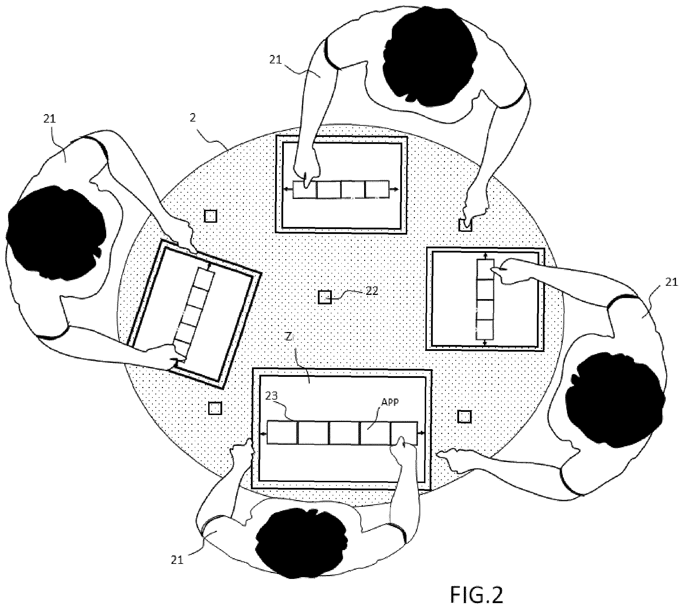

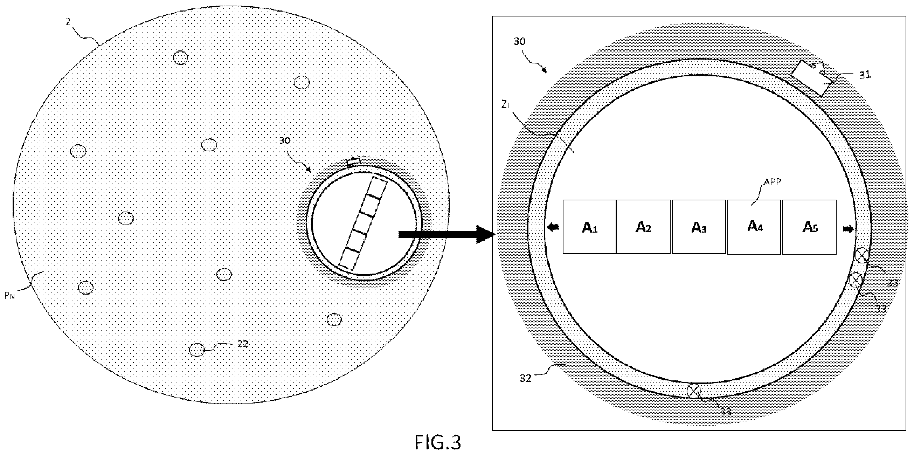

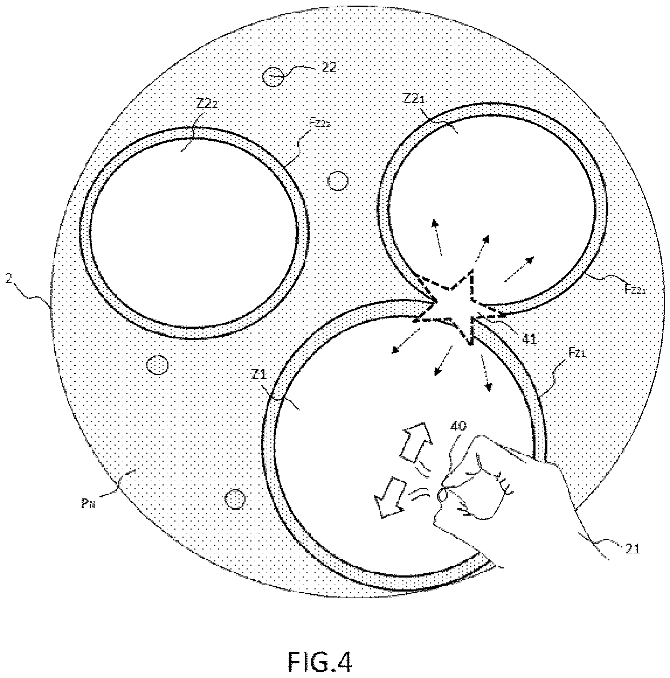

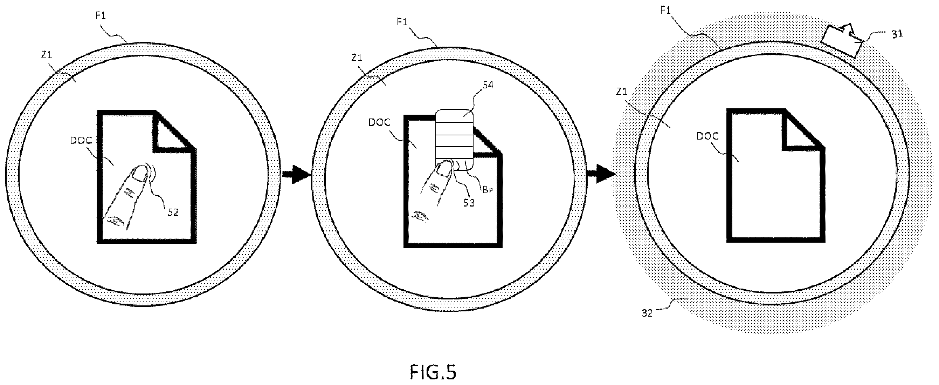

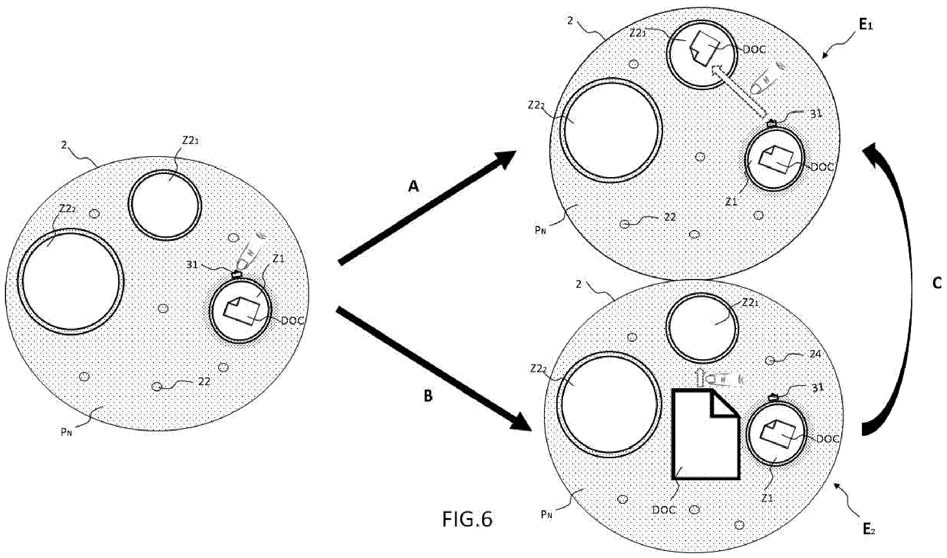

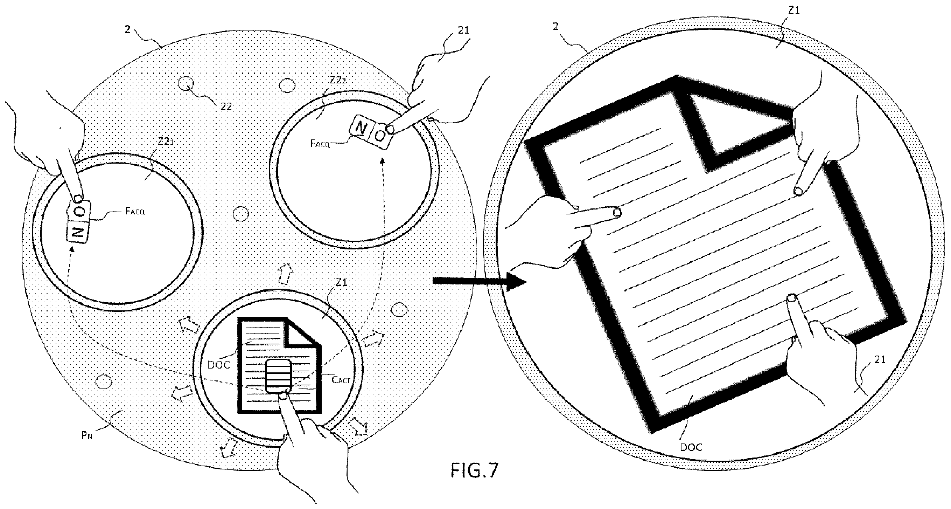

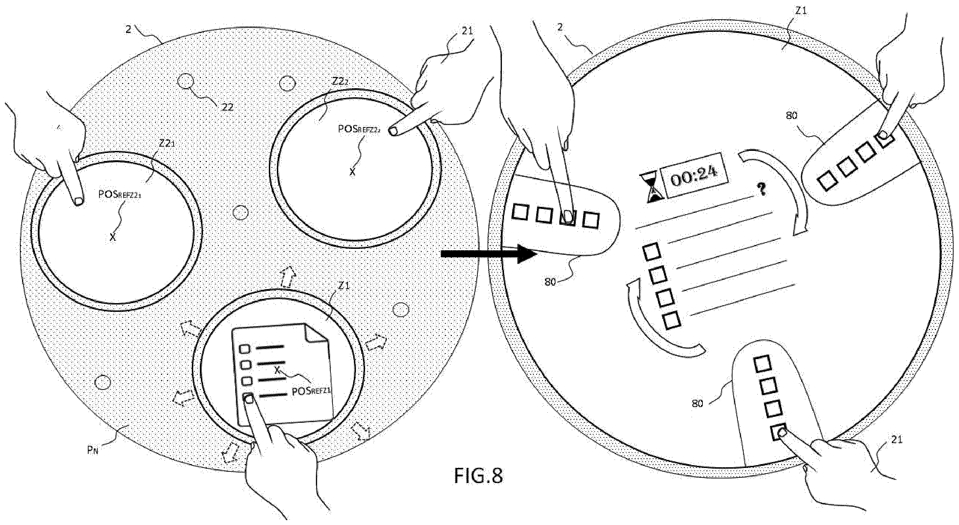

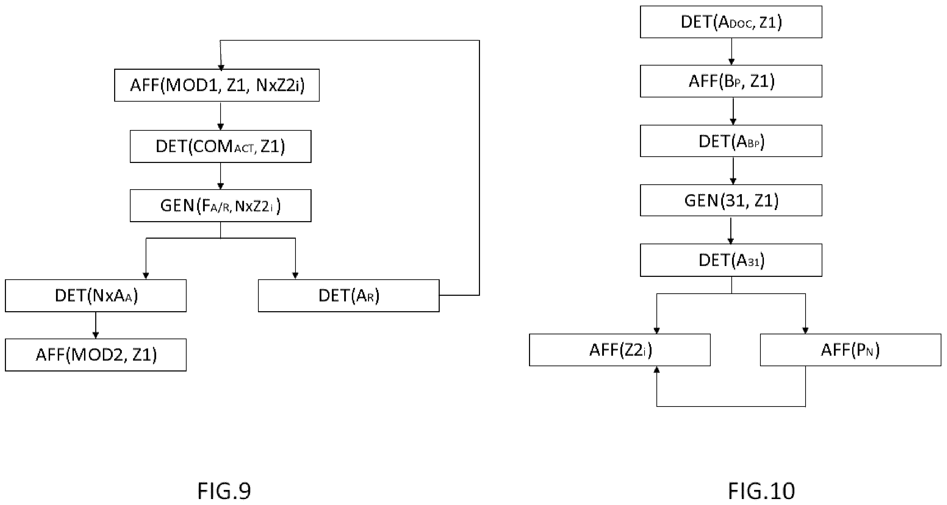

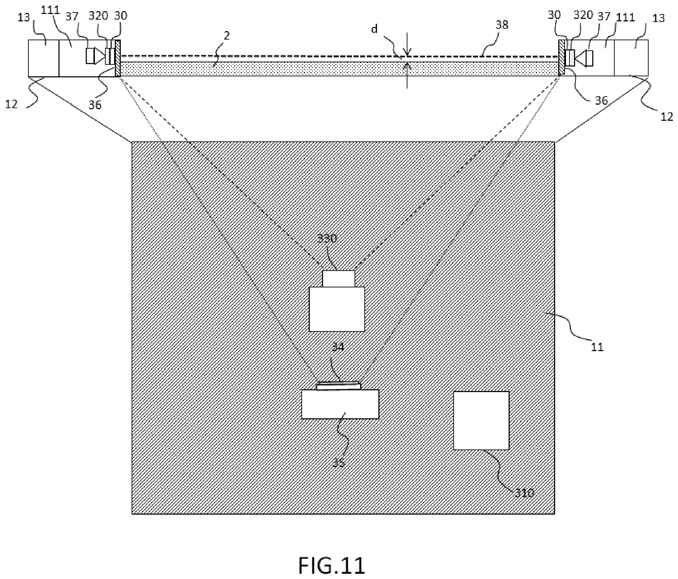

D'autres caractéristiques et avantages de l'invention ressortiront à la lecture de la description détaillée qui suit, en référence aux figures annexées, qui illustrent :
▪ figure 1 : un exemple d'une table tactile représentée en perspective selon l'invention ;
▪ figure 2 : une vue de dessus d'un exemple de table tactile comprenant des zones interactives selon un mode de réalisation de l'invention ;
▪ figure 3 : une vue de dessus d'un exemple d'écran tactile comprenant une zone interactive circulaire affichée sur ledit écran et un agrandissement de ladite zone interactive circulaire;
▪ figure 4 : une vue de dessus d'un écran tactile selon l'invention comprenant un procédé de gestion spatiale permettant d'assurer la non-superposition des zones interactives ;
▪ figure 5 : un schéma représentant les étapes du procédé d'extraction d'une copie d'un document d'une zone interactive selon l'invention;
▪ figure 6 : une vue de dessus des deux modes de partage d'un document d'une zone interactive d'un écran tactile ;
▪ figure 7 : un schéma représentant les étapes du procédé d' « acceptation mutuelle » permettant de passer d'un premier mode d'interactivité à un second mode d'interactivité ;
▪ figure 8 : un schéma représentant un exemple de mémorisation d'une position de référence de chaque zone interactive lors d'un passage du premier mode d'interactivité au second mode d'interactivité ;
▪ figure 9 : les étapes du procédé d' « acceptation mutuelle » selon l'invention ;
▪ figure 10 : les étapes du procédé de partage d'un document selon l'invention ;
▪ figure 11: une vue de coupe de la table de l'invention comprenant les différents éléments permettant de rendre la table interactive.

### DESCRIPTION

On nommera dans la suite de la description une « zone interactive », une « zone », l'élément Zᵢ représenté dans les figures. Cet élément Zi permet à un ou à une pluralité d'utilisateurs 21 d'avoir accès à un environnement numérique. Lorsque l'on évoque la zone interactive Zi d'un utilisateur 21 donné dont les actions impliquent, par exemple, d'autres actions d'autres utilisateurs 21, on nomme la zone interactive concernée Z1. Dans ce cas de figure, les autres zones des autres utilisateurs 21 sont notées Z2i, avec i définissant une zone interactive dédiée à un utilisateur i.

On définit une action tactile comme étant au moins un toucher sur un écran tactile et/ou un déplacement du toucher sur l'écran 2. Différentes actions tactiles peuvent être prises en compte selon le procédé de l'invention. Notamment, une action tactile peut comprendre une combinaison d'actions tactiles élémentaires telles qu'un toucher simple ou en mouvement. Ces actions tactiles définissent alors des actions tactiles complexes. Par exemple, une action tactile complexe peut comprendre deux touchers tactiles successifs ou un toucher tactile sur un même point pendant une durée prédéterminée, ou encore un toucher tactile pendant une durée prédéterminée parallèlement à un déplacement dudit toucher.

La figure 1 représente un exemple d'une table tactile 1 représentée en perspective selon l'invention. La table tactile interactive 1 comprend un bâti 11 et un écran tactile 2 situé à la surface supérieure d'un support 13. La table interactive tactile 1 peut, avantageusement, être utilisée par un ou plusieurs utilisateurs 21.

### Table circulaire

Selon un mode de réalisation, la table tactile 1 est circulaire. La circularité de la table 1 est particulièrement adaptée à un usage multi-utilisateurs. Chaque utilisateur 21 peut librement se placer autour de la table 1 et interagir par exemple dans une zone dédiée Zᵢ à chacun d'entre eux. Le bâti 11 et le support 13 présentent avantageusement respectivement une forme cylindrique et une forme demi-sphérique. Cette architecture confère à la table 1 une réelle convivialité et une esthétique adaptée à des usages publics multi-utilisateurs. La forme circulaire du support 13 a été avantageusement choisie afin d'assurer un vis-à-vis des utilisateurs 21. Ainsi la convivialité et le dialogue sont favorisés tout en permettant une interactivité de chacun des utilisateurs 21 avec un contenu dédié ou mutualisé affiché sur l'écran 2.

### Table rectangulaire

Selon un autre mode de réalisation, la table tactile 1 a une forme parallélépipédique telle qu'une forme rectangulaire ou carrée. La forme rectangulaire ou carrée de ladite table 1 permettant notamment de la ranger dans un angle ou dans un coin d'une pièce lorsqu'elle n'est pas utilisée. Dans ce cas, le bâti 11 et le support 13 présentent avantageusement une forme de parallélépipède rectangle pour épouser au mieux le contour de l'écran 2.

### Toutes les tables

Dans tous les modes de réalisation, la table tactile interactive 1 peut avantageusement favoriser la créativité en groupe, la négociation et le débat. Un intérêt d'une telle table 1 est de permettre la prise en compte d'une pluralité de zones d'interactivités Zi personnalisées et la prise en compte de points d'interaction multiples dans cette zone. La table interactive tactile 1 de l'invention est configurée pour gérer plus de cent points d'interaction simultanément correspondant pour l'utilisateur 21 à des points de contacts tactiles. Selon un premier exemple, ladite table tactile interactive 1 peut être utilisée pour présenter et organiser des projets. Selon un second exemple, la table interactive tactile 1 peut être utilisée dans le domaine du marketing, par exemple pour la présentation de produits, ou encore dans le domaine de l'évènementiel et des salons pour présenter des informations relatives à un produit, un service ou une entreprise. La table interactive 1 permet en outre d'offrir un large panel d'informations notamment dans le secteur du tourisme et de la culture tel que la muséographie, la scénographie.

Selon un mode de réalisation, le bâti 11 et le support 13 sont rendus solidaires entre eux de sorte à rendre la table interactive tactile 1 monobloc. Cette configuration est particulièrement utile pour les déplacements de la table 1, pour son aspect esthétique et pour offrir une meilleure solidité lors de ses manipulations.

### Support

Le support 13 comprend un bord circulaire 12 et un écran 2.

Selon un mode de réalisation, le diamètre de l'écran 2 est adapté pour offrir une surface atteignable par un bras d'homme se penchant sur l'écran 2. Le diamètre est donc préférentiellement compris entre 65 cm et 120 cm. Un exemple de réalisation défini un diamètre sensiblement égal à 75 cm.

L'écran 2 a une première fonction d'afficheur des images projetées par un moyen de projection 330. Selon un mode de réalisation, l'écran 2 peut être en verre, en plexiglass, en polycarbonate, en acrylique, etc.

Le bâti 11 peut comprendre un moyen de projection 330, un moyen de capture d'images 35 et un calculateur 110. Un mode de réalisation d'une table interactive 1 et des composants matériels sont détaillés dans la suite de la description au regard de la figure 11.

### Principe de fonctionnement

La figure 2 illustre une vue de dessus d'un exemple de table tactile 1 comprenant des zones interactives Zᵢ rectangulaires. Dans un autre mode de réalisation lesdites zones interactives Zᵢ sont circulaires. Les zones interactives Zᵢ permettent d'accéder à un environnement numérique dédié à un utilisateur 21. Un environnement numérique est un espace dans lequel un utilisateur 21 accède à un ensemble de ressources et de services numériques. Par exemple, l'environnement numérique comprend un navigateur WEB, des applications APP tels que des jeux ou des utilitaires. En outre, l'environnement numérique peut permettre à un utilisateur 21 d'accéder ou de télécharger des documents d'un réseau. Selon un mode de réalisation, l'environnement numérique comprend une gestion multitâches permettant d'accéder et d'utiliser différentes applications APP ou services. L'écran tactile 2 permet d'afficher, de modifier, d'agrandir et de réduire, ou encore de déplacer des documents ou des données d'intérêts produites par des applications ou services de l'environnement numérique.

Dans la suite de la description, on appelle document DOC tout ensemble de données :
▪ soit produit par une application de l'environnement numérique sous forme de données d'intérêts rassemblées dans la zone d'interactivité dédié à un utilisateur;
▪ soit un document numérique représentant un média tel que par exemple un texte, une image ou encore une vidéo.

### Accès aux applications

Selon un mode de réalisation, l'accès à des applications APP sur une zone interactive Zᵢ peut avantageusement être réalisé par une interface de navigation proposant une pluralité d'icônes graphiques par lesquelles les applications APP peuvent être activées et donc lancées et affichées. Les icônes graphiques A₁, A₂, A₃, A₄, A₅ représentées par exemple sur la figure 3 sont des raccourcis permettant d'accéder aux applications APP par une simple action tactile. La génération desdites icônes graphiques A₁, A₂, A₃, A₄, A₅ sont, par exemple, affichées sur un écran d'accueil accessible à tout moment par l'intermédiaire d'un bouton de retour à l'accueil. La navigation parmi les icones graphiques A₁, A₂, A₃, A₄, A₅ associées aux applications APP peut être effectuée par des actions tactiles simples ou complexes dans la zone interactive Zi ou au moyen de boutons de navigation, tels que des flèches.

Selon un mode de réalisation, le nombre d'icônes graphiques A₁, A₂, A₃, A₄, A₅ présentes dans l'écran d'accueil d'une zone interactive Zᵢ dépend des dimensions de ladite zone interactive Zᵢ. En effet, lorsque les dimensions d'une zone interactive Zᵢ augmentent, ledit nombre d'icônes graphiques A₁, A₂, A₃, A₄, A₅ affichées sur ladite zone Zi augmente. De la même manière, lorsque les dimensions d'une zone interactive Zᵢ diminuent, ledit nombre d'icônes graphiques A₁, A₂, A₃, A₄, A₅ affichées sur ladite zone Zi diminue. L'accès à d'autres d'icônes graphiques par exemple A₆, A₇, A₈ associées à d'autres applications APP peut être réalisé, par exemple, par une action tactile sur l'écran d'accueil.

### Zones d'accès

Selon un mode de réalisation, l'écran 2 permet l'affichage d'au moins une zone interactive Zi. L'affichage d'une telle zone interactive Zi peut se faire par l'intermédiaire d'une action tactile sur au moins une zone d'accès 22 à l'environnement numérique. L'affichage des zones d'accès 22 peut être assuré par la génération de symboles ou de motifs de petites dimensions afin de libérer le maximum de surface dédiée à l'affichage des zones interactives Zᵢ. Les motifs 22 peuvent se mouvoir sur l'écran 2 selon des déplacements prédéfinis ou calculés dynamiquement pour permettre un accès plus facile à un nouvel arrivant.

Selon un mode de réalisation, les zones d'accès 22 peuvent avantageusement avoir une représentation fantaisiste telle que des bulles que l'utilisateur 21 éclate sous l'action d'un toucher tactile. L'éclatement de la bulle aboutit à l'ouverture d'une zone interactive Zᵢ.

Selon un autre exemple de réalisation, les zones d'accès 22 ne sont pas affichées et l'utilisateur 21 accède à une zone interactive Zᵢ par une action tactile sur une position neutre P_{N} de l'écran 2 non occupé par une zone interactive Zᵢ déjà affichée.

### Modes d'interactivité

Selon une variante de réalisation, un premier mode d'interactivité MOD1 peut être engagé par au moins un utilisateur 21 ou une pluralité d'utilisateur 21 tels que représenté à la figure 2. Dans ce cas, l'écran 2 comprend au moins une zone interactive Zᵢ affichée recouvrant une portion de l'écran 2 de sorte qu'une pluralité d'utilisateurs 21 peut accéder à un environnement numérique indépendamment des autres. Lors de la génération d'une zone Zᵢ, un calculateur 110 permet de prendre en compte les zones Zᵢ déjà affichées, leur position et la surface recouverte de l'écran 2 par ces dernières. L'ouverture d'une nouvelle zone interactive Zᵢ est alors configurée de sorte que les zones Zᵢ déjà affichées ne sont pas impactées par l'arrivée d'une nouvelle zone Zᵢ. Selon un mode de réalisation, le calculateur 110 adapte automatiquement la taille de la zone interactive Zᵢ nouvellement créée à l'espace disponible de l'écran 2 non recouvert par une zone Zᵢ déjà existante.

Le procédé de l'invention permet ainsi d'afficher simultanément différentes zones interactives Zᵢ en évitant tout chevauchement de ces dernières. Le premier mode d'interactivité MOD1 correspond donc à une utilisation de la table 1 par une pluralité d'utilisateurs 21 ayant chacun son propre environnement numérique.

Selon une autre variante de réalisation, un second mode d'interactivité MOD2 permet de partager une unique zone Zᵢ et donc un unique environnement numérique avec une pluralité d'utilisateurs 21. Dans ce cas, l'écran 2 comprend une seule zone interactive Zᵢ affichée en plein écran de sorte que plusieurs utilisateurs 21 peuvent réaliser par exemple des actions tactiles sur une même zone interactive Zᵢ. L'application APP ou le service sollicité est dans ce cas partagé par différents utilisateurs 21.

### Partage (principe général)

Selon un autre mode de réalisation, le procédé de l'invention permet de partager un contenu numérique d'une zone donnée, c'est-à-dire un document DOC, avec d'autres utilisateurs 21.

Selon une première variante, le document DOC d'une zone interactive Z1 peut avantageusement être partagé par un utilisateur 21 de sorte qu'il soit copié ou extrait en dehors de ladite zone d'interactivité Z1 et qu'il couvre une portion de la surface de l'écran 2 sans chevaucher les autres zones interactives Z2ᵢ, c'est-à-dire que le document DOC ne se superpose pas à une zone interactive Z2i. Cette première variante permet un partage du document DOC avec plusieurs utilisateurs 21 en ne l'affichant qu'une seule fois sur l'écran 2.

La figure 3 représente une vue de dessus d'un exemple d'écran tactile 2 comprenant une zone interactive Zᵢ circulaire affichée sur ledit écran 2 et un agrandissement de ladite zone interactive Zᵢ circulaire sur la partie droite de la figure.

Selon un mode de réalisation, une zone interactive Zi circulaire est affichée sur un écran tactile 2 dans laquelle une pluralité d'applications APP est accessible. Chaque application APP est activable par une action tactile sur les icônes graphiques A₁, A₂, A₃, A₄, A₅ associés auxdites applications APP.

Selon un mode de réalisation, un utilisateur 21 peut avantageusement extraire une copie d'un document DOC affiché sur la zone interactive Zᵢ en vue de le partager. L'extraction de ladite copie génère une icône graphique 31 à la périphérie de ladite zone 32 de sorte à pouvoir ensuite le partager en réalisant une action tactile sur ladite icône graphique 31. La zone périphérique 32 n'est pas nécessairement représentée à l'écran 2 et peut être non perçue par un utilisateur 21.

### Boutons périphériques

Selon un mode de réalisation, une zone interactive Zᵢ comprend des boutons 33 disposés en bordure de ladite zone interactive Zᵢ. Lesdits boutons 33 peuvent avantageusement servir à accéder à des applications APP par exemple en permettant de revenir à l'écran d'accueil. Selon un mode de réalisation, un autre bouton 33 permet de partager un contenu numérique, c'est-à-dire un document DOC, avec une communauté d'un réseau social. Le bouton 33 permet d'accéder à un choix de réseaux sociaux et permet possiblement d'activer l'affichage d'une fenêtre d'authentification au compte utilisateur dans le dit réseau social sélectionné. Selon un autre mode de réalisation, un bouton 33 affiché en bordure de la zone interactive Zi permet d'engager une procédure de passage d'un mode d'interactivité MOD1, ou MOD 2 à un autre mode d'interactivité MOD1 ou MOD2.

Selon d'autres modes de réalisation qui peuvent se combiner avec ces derniers modes, des boutons 33 d'accès rapide à certaines applications APP peuvent être affichées en bordure d'une zone interactive Zi par exemple au moyen d'une pré-configuration de la table tactile 1. Selon un autre cas, un bouton 33 d'accès à une fenêtre d'authentification permet d'associer un environnement numérique à un utilisateur 21 donné de sorte que des cookies, des options de préférences mémorisées soient réattribuées lors de l'ouverture d'une zone interactive Zi.

Lorsque qu'une même zone est partagée entre une pluralité d'utilisateurs, l'invention comporte une fonction tactile permettant de faire tourner cette zone selon différents angles possibles. Selon un mode de réalisation, l'angle de rotation de la zone affichée en plein écran est calculé à partir d'une mesure d'un déplacement détecté d'une action tactile effectuée sur une portion de la périphérie de la table.

La rotation peut donc être ajustée en fonction de la position d'un utilisateur autour de la table. La commande tactile peut être effectuée à partir d'un mouvement du doigt sur une portion de la zone périphérique de la table. Selon un autre mode d'exemple, l'action peut être réalisée sur une zone centrale de la table. Cette fonction peut être, par exemple, désactivée lorsque les utilisateurs reviennent à un mode d'affichage correspondant au premier mode d'interactivité.

Un avantage de ce mode de réalisation est de permettre d'effectuer une rotation adaptée à une consigne d'un utilisateur par un simple mouvement de la main qui lui permet d'ajuster précisément la position de l'orientation de la zone à afficher. Ainsi les rotations ne sont pas définies uniquement selon un angle prédéfini de 90° ou de 180°.

### Fonction anticollision

La figure 4 représente une vue de dessus d'un écran tactile 2 selon l'invention comprenant un procédé de gestion spatiale permettant d'assurer la non-superposition des zones interactives Zᵢ. Cette fonction est également appelée fonction d'anticollision des zones interactives Zi.

Selon un mode de réalisation, une première zone Z1 ainsi qu'une pluralité de secondes zones Z2ᵢ sont affichées sur un écran tactile 2. L'agrandissement ou le déplacement d'une première zone Z1 par une action tactile 40 à la surface de ladite première zone Z1 est limité par une fonction d'anticollision. La détection d'un contact 41 entre deux zone Z1 et Z2₁ sur la figure 4 comprend une détection d'un déplacement d'une frontière F_{Z1} interceptant au moins la frontière F_{Z2₁} d'une autre zone. Consécutivement à cette détection, une génération d'une consigne d'arrêt du déplacement de ladite frontière F_{Z1} permet d'assurer la non superposition des zones Z1 et Z2₁ entre elles. Cette fonction est particulièrement avantageuse lorsque plusieurs secondes zones interactives Zᵢ sont affichées simultanément sur un écran 2 et qu'une première zone Z1 est agrandie ou ouverte ou déplacée sur ledit écran 2.

### Fonction d'extraction de document

La figure 5 est un schéma représentant l'extraction d'une copie d'un document DOC d'une zone interactive Z1 selon le procédé de l'invention.

Selon un mode de réalisation, le procédé d'extraction d'une copie d'un document DOC comprend est engagé par une action tactile sur un document DOC affiché sur une première zone Z1. L'action tactile peut être une action simple ou complexe. Selon un exemple de réalisation, ladite action tactile engage la génération d'un bouton, appelé bouton de partage B_{P}, dans ladite première zone Z1. L'actionnement du bouton de partage B_{P} engage une extraction d'une copie du document DOC de la première zone Z1. La copie du document DOC s'affiche avantageusement sous forme d'une icône graphique 31 de sorte à pouvoir la déplacer ensuite aisément par une action tactile en vue de la partager. De plus, l'affichage sous forme d'une icône 31 permet de réaliser d'autres actions sur la première zone Z1 sans que le document DOC n'occupe de place sur ladite zone Z1. Ladite icône 31 est avantageusement ancrée à la périphérie 32 de la première zone Z1 dans la zone. Par conséquent, l'icône graphique 31, représentant le document DOC extrait, est solidaire des mouvements de la frontière F1 de ladite première zone Z1. L'ancrage de ladite icône 31 à la périphérie 32 de ladite zone Z1 permet d'identifier à quelle zone Zi est associée chaque icône graphique 31. De plus, cet ancrage permet de partager ensuite aisément le document DOC extrait par une action tactile, simple ou complexe, sur ladite icône graphique 31. Le partage du document DOC peut alors soit être effectué vers une portion neutre P_{N} de l'écran 2 non recouverte d'une zones interactive Zᵢ, soit être effectué vers une autre zone interactive Z2i.

### Fonction de partage de document

La figure 6 est une vue de dessus des deux modes de partage d'un document DOC d'une zone interactive Zᵢ d'un écran tactile 2.

Une copie d'un document DOC d'une première zone Z1 est affichée sous forme d'une icône graphique 31 ancrée à la périphérie 32 de ladite zone Z1.

Selon un mode de réalisation, un premier mode de partage, appelé E₁ selon une étape A, comprend un déplacement de l'icône graphique 31 vers une autre zone interactive Z2i initié par une action tactile. Par exemple, une action tactile peut être un toucher pendant une période prédéfinie sur ladite icône graphique 31. Le toucher peut être maintenu continument lors du déplacement vers au moins une seconde zone Z2₁ Le document DOC est alors affiché dans ladite seconde zone Z2₁.

Dans un autre mode de réalisation, le déplacement de ladite icône graphique 31 dans au moins une seconde zone Z2₁ génère une seconde icône graphique 31 ancrée à la périphérie 32 de ladite seconde zone Z2₁ de sorte que l'utilisateur 21 de ladite zone Z2₁ puisse afficher le document DOC ultérieurement sur ladite zone Z2₁.

Dans un mode de réalisation, une action tactile sur l'icône graphique 31 génère une barre de boutons permettant de choisir par une action tactile sur au moins un bouton, la ou les zones Zᵢ avec lesquelles l'utilisateur 21 de la première zone Z1 souhaite partager le document DOC.

Selon un autre mode réalisation, un second mode de partage, appelé E₂ selon une étape B, comprend un déplacement de l'icône graphique 31 vers une portion neutre P_{N} de l'écran 2 non recouverte par une zone interactive Zᵢ. Par exemple, une action tactile peut être engagée pendant une période prédéfinie sur ladite icône 31 tout en la déplaçant vers une portion neutre P_{N} de l'écran 2 non recouverte par des zones Zᵢ de sorte à afficher le document DOC pour tous les utilisateurs 21. Le document DOC est dans ce cas affiché en dehors d'une zone interactive Zi.

Selon les deux modes de partage, une action tactile sur l'icône graphique 31 génère une barre de boutons permettant de choisir le mode de partage souhaité.

Selon un mode de réalisation, un passage du second mode de partage E₂ au premier mode E₁ de partage est réalisé selon une étape C. Un document DOC positionné sur une portion neutre P_{N} de l'écran 2 peut avantageusement être partagé vers une zone affichée Zᵢ. Ce partage peut être engagé en exerçant, par exemple, une action tactile pendant une période prédéfinie sur ledit document DOC tout en le déplaçant vers au moins une zone affichée Zᵢ.

Dans un autre mode de réalisation, une action tactile sur le document DOC positionné à l'extérieur des zones Zᵢ génère une barre de boutons permettant de choisir, par une action tactile sur au moins un bouton, le partage dudit document DOC dans une zone Zᵢ. Le document DOC partagé peut avantageusement s'afficher sur une zone Zi ou s'afficher sous forme d'une icône graphique 31 ancrée à la périphérie 32 de ladite zone Zi. Ce dernier cas permet à utilisateur 21 d'afficher ultérieurement le document DOC dans sa zone interactive Zi.

Dans tous les modes de réalisation, un procédé de gestion spatiale permet d'assurer la non-superposition des zones interactives Zᵢ grâce à la fonction d' « anticollision ».

La figure 7 est un schéma représentant les étapes d'une fonction d' « acceptation mutuelle » du procédé de l'invention permettant de passer du premier d'interactivité MOD1 au second mode d'interactivité MOD2. Le premier mode d'interactivité MOD1 comprend un affichage d'au moins deux zones Zᵢ permettant aux utilisateurs 21 d'accéder individuellement à un environnement numérique. Le second mode d'interactivité MOD2 comprenant un affichage plein écran d'une zone Zᵢ permettant aux utilisateurs 21 d'accéder au même environnement numérique.

Chaque zone interactive Zi comprend la possibilité d'initiée une fonction d' « acceptation mutuelle ».

Selon un mode de réalisation, le passage du premier mode d'interactivité MOD1 au second mode d'interactivité MOD2 est réalisé par une action tactile sur une première zone Z1. Ladite action générant une barre de boutons permettant notamment de générer une commande d'activation COM_{ACT} du second mode d'interactivité MOD2 dans ladite première zone Z1.

Un calculateur 110 détecte la commande d'activation COM_{ACT} engagée par un utilisateur 21 sur un bouton approprié et génère des fenêtres d'acceptations F_{A} sur chacune des autres zones interactives Z2i. Selon un premier mode de réalisation, au moins une action tactile engageant un refus par un autre utilisateur 21 dans une zone interactive Z2i permet de cesser la fonction d' « acceptation mutuelle ». Selon un mode de réalisation, l'utilisateur 21 de la zone interactive Z1 est alors prévenu par la génération d'un message ou d'une fenêtre indiquant que l'acceptation a échoué.

Dans ce cas, le refus d'activer le second mode d'interactivité MOD2 par au moins un utilisateur 21 d'une seconde zone Z2ᵢ interrompt l'activation dudit second mode d'interactivité MOD2. Le premier mode d'interactivité MOD1 est alors conservé pour chaque utilisateur 21.

Selon un mode de réalisation, le calculateur 110 intégré à la table tactile 1 détecte l'ensemble des A_{A} acceptations du passage au second mode d'interactivité MOD2 de l'ensemble des secondes zones (Z2ᵢ)_{i∈[1;N]} affichées. Dans ce cas de figure, chaque utilisateur 21 de chaque zone interactive Z2i a précédemment réalisé une action tactile sur l'ensemble des fenêtres d'acceptation F_{A} indiquant une acceptation au passage du second mode d'interactivité MOD2.

Ladite détection par un calculateur 110 de l'ensemble des fenêtres d'acceptation F_{A} génère un affichage plein écran de la première zone Z1 de sorte que l'ensemble des utilisateurs 21 de la table puissent accéder en plein écran à la zone interactive Z1. Dans ce contexte, le contenu numérique de la première zone Z1 est accessible à tous les utilisateurs 21.

La figure 8 est un schéma représentant un exemple de mémorisation d'une position de référence POS_{REFZᵢ} de chaque zone interactive Zᵢ lors d'un passage du premier mode d'interactivité MOD1 au second mode d'interactivité MOD2.

Selon un mode de réalisation, une position de référence POS_{REFZi} d'au moins une zone Zᵢ sur l'écran tactile 2 est mémorisée dans une mémoire M. Ladite mémorisation est particulièrement avantageuse lors d'un passage du premier mode d'interactivité MOD1 au second mode d'interactivité MOD2 pour générer et afficher des symboles graphiques dans le zone interactive Z1 dédié à chaque utilisateur 21. Ainsi les positions préalables de chaque utilisateur 21 sont mémorisées pour favoriser une interactivité dans le second mode d'interactivité MOD2.

Notamment, lorsqu'une application APP de la première zone Z1 comprend des fonctions multi-utilisateurs, telles que par exemple un jeu de type quizz, la génération d'un environnement numérique dédié à chaque utilisateur 21 dans la zone interactive Z1 est particulièrement avantageuse.

Dans cet exemple représenté à la figure 8, le second mode d'interactivité MOD 2 comprend l'affichage d'un quizz multi-joueurs. La mémorisation de l'ensemble des positions de référence POS_{REFZi} de chaque zone Z1 et Z2ᵢ, permet, lors du passage du premier MOD1 au second mode d'interactivité MOD2, de générer des fenêtres interactives 80 relatives à chaque position de référence POS_{REFZi}.

Dans une première variante de réalisation, la position de référence POS_{REFZi} peut être, par exemple, le centre de chaque zone interactive Z1 ou Z2i.

Dans une seconde variante de réalisation, la position de référence POS_{REFZᵢ} de chaque zone Zᵢ correspond à un point situé entre le centre d'une zone Zᵢ et la frontière de ladite zone Zᵢ de sorte que ledit point soit proche de la position de la main d'un utilisateur 21.

Selon un mode de réalisation, les fenêtres interactives 80 sont générées selon la nature de l'application APP activée par la première zone Z1. Par exemple, lors d'un quizz multi-joueurs, une fenêtre interactive 80, comprenant des boutons correspondant à des réponses possibles à une question, est générée à chaque position de référence POS_{REFZᵢ} mémorisée lors du premier mode d'interactivité MOD1. Selon un mode de réalisation, les questions et les réponses possibles sont affichées au centre de l'écran 2 de sorte que l'ensemble des joueurs puissent lire lesdites questions et réponses possibles. L'affichage desdites questions et réponses peut par exemple être effectué par une rotation desdites questions et réponses tout en prenant en compte une vitesse de lecture qui soit confortable pour chaque utilisateur 21.

La figure 9 illustre le procédé d'« acceptation mutuelle » selon l'invention permettant le passage du premier MOD1 au second mode d'interactivité MOD2.

Une première étape du procédé de l'invention, notée AFF(MOD1, Z1, NxZ2ᵢ) comprend l'affichage du premier mode d'interactivité MOD1 correspondant à l'affichage d'une première zone interactive Z1 et N secondes zones interactive Z2ᵢ sur un écran tactile 2. On note que N peut être égal à 1.

Une seconde étape du procédé de l'invention, notée DET(COM_{ACT}, Z1), comprend une détection d'une commande d'activation du second mode d'interactivité (MOD2) dans au moins une première zone Z1.

Selon un mode de réalisation, le passage du premier mode MOD1 au second mode d'interactivité MOD2 peut être activé par un ou par une pluralité d'utilisateurs 21. Chaque utilisateur 21 peut, par une action tactile sur un point appartenant à une première zone interactive Z1, afficher un bouton ou une barre de boutons permettant de générer une commande d'activation COM_{ACT} du second mode MOD2 dans ladite zone interactive Z1. Ladite commande d'activation COM_{ACT} est détectée par un calculateur 110 couplé à un moyen de capture d'images 35 compris, par exemple, dans un bâti 11 situé dans la partie inférieure de la table tactile 1.

Une troisième étape, notée GEN(F_{A/R}, NxZ2ᵢ) comprend une génération d'une fenêtre d'acceptation F_{A} dans les N secondes zones Z2ᵢ affichées sur l'écran 2.

Selon un mode de réalisation, une fenêtre d'acceptation F_{A} est générée sur chaque seconde zone affichée Z2ᵢ. Ladite fenêtre F_{A} peut, par exemple, comprendre deux boutons, un bouton d'acceptation et un bouton de refus du passage au second mode MOD2.

Selon un premier mode de réalisation, une détection d'une action tactile sur le bouton d'acceptation DET(A_{A}) sur chaque fenêtre d'acceptation F_{A} des N zones d'interactivité Z2i conduit à un passage au second mode d'interactivité MOD2.

Selon un second mode de réalisation, une détection d'une action tactile sur le bouton de refus DET(A_{R}) conduit à la conservation du premier mode d'interactivité MOD1 pour l'ensemble des zones interactives Z1, et les N zones d'interactives Z2ᵢ. Si un refus est détecté, selon un exemple de réalisation, une génération d'un message ou d'une fenêtre interactive dans l'ensemble des zones interactives Zᵢ indique le refus du passage au second mode d'interactivité MOD2. Dans ce cas l'arrêt de la fonction d' « acceptation mutuelle » est engagé. Dans un second exemple, une seule fenêtre interactive indiquant le refus du passage au second mode d'interactivité s'affiche sur la première zone Z1.

La figure 10 illustre la fonction de partage du procédé de l'invention permettant le partage d'un document DOC d'une première zone Z1 avec d'autres utilisateurs 21.

Une première étape, notée DET(A_{DOC}, Z1) comprend la détection d'une action tactile sur un document DOC affiché dans une première zone Z1 au moyen d'un dispositif de capture d'images 35 couplé avec un calculateur 110.

Une seconde étape, notée AFF(BP, Z1), comprend l'affichage d'un bouton de partage B_{P} sur la première zone interactive Z1.

Une troisième étape, consécutive à l'action tactile d'un utilisateur 21 sur le bouton de partage B_{P} pour engager l'extraction d'une copie du document DOC, comprend une détection par un calculateur 110 couplé à un moyen de captures d'images 35 et notée DET(A_{BP}).

Une quatrième étape est alors engagée, notée GEN(31, Z1), permettant de générer une icône graphique 31 en périphérie 32 de la zone interactive Z1.

Deux étapes peuvent être alors réalisées alternativement.

Une étape d'affichage, notée AFF(P_{E}), du document DOC pour tous les utilisateurs 21 dans une portion neutre P_{N} de l'écran 2 ne comprenant pas de zone interactive Zi. Le document DOC ainsi affiché peut être manipulé par chaque utilisateur 21. Différentes actions sont alors réalisables sur ledit document DOC, telles que : l'agrandissement ou la réduction du document DOC, le changement d'orientation, son annotation ou encore sa fermeture ou son enregistrement dans un porte-documents d'une des zones interactives Zi.

Une autre étape de transfert et d'affichage, notée AFF(Z2i), du document dans une zone interactive Z2i choisie par un utilisateur 21 peut être engagée à partir du point d'ancrage du document DOC en périphérie 32 de la première zone Z1. Une copie du document DOC peut être ainsi partagée avec un autre utilisateur 21 dans sa zone interactive Zi.

On note que le document DOC partagé peut être de différentes natures, telles que par exemple un document .pdf ou une page WEB ou encore un média vidéo ou audio ou texte.

### Exemple de réalisation d'une table tactile

La figure 11 illustre une vue de coupe d'une table tactile interactive 1 de l'invention. La table représentée dans cet exemple est circulaire. On note que le procédé de l'invention peut être aussi bien réalisé par une table circulaire ou rectangulaire ou carrée. Le bord circulaire 12 comprend des moyens d'émission 37 d'une nappe lumineuse 38 générée dans un plan parallèle à l'écran 2, appelée plan de détection 38. La nappe lumineuse 38 couvre avantageusement la totalité de la surface de l'écran 2.

On nomme également indifféremment la nappe lumineuse 38 que le plan de détection 38 dans la suite de la description par commodité de lecture des dessins. L'élément 38 représentant ainsi la forme géométrique plane et les faisceaux infrarouges inscrits dans ce plan formant la nappe 38.

Selon un mode de réalisation, le bord circulaire 12 comprend en option une partie extérieure circulaire formant un support d'appui 13, par exemple en bois, et une partie intérieure formant un profilé 111. Préférentiellement, le profilé 111 peut être métallique afin d'éviter les risques de déformation dudit profilé 111. Avantageusement, le profilé 111 est à section rectangulaire pour recouvrir les moyens d'émission 37. Ces derniers peuvent ainsi être camouflés de la vue des utilisateurs 21. La forme rectangulaire permet donc d'offrir un prolongement du support d'appui 13 de la table interactive 1 permettant de poser une main ou un objet et d'étendre la surface du support d'appui 13. Selon d'autres modes de réalisation, le profilé 111 peut avoir une autre section que la section rectangulaire.

### Moyens d'émission (lasers)

Selon un mode de réalisation, les moyens d'émission 37 sont des lasers infrarouges. Les lasers 37 infrarouges ont préférentiellement une puissance maitrisée pour ne pas constituer un danger direct pour l'oeil humain qui y serait exposé pendant un laps de temps donné. La puissance des lasers 37 est adaptée aux dimensions de la table pour que chaque faisceau lumineux Fₛᵢ offre une intensité lumineuse suffisante à la détection d'un point d'interaction 430 situé à un point opposé au moyen d'émission 37. Selon un mode de réalisation, les lasers 37 sont configurés pour émettre des rayons infrarouges dont la longueur d'onde est comprise entre 750 nm et 1000 nm. Par exemple, une longueur d'onde de 830 nm peut être utilisée. Les lasers 37 infrarouges sont avantageusement couplés à des diffracteurs linéaires 320 de sorte à générer des faisceaux qui soient compris dans un plan parallèle à l'écran 2.

Avantageusement, les diffracteurs 320 choisis sont linéaires afin de concentrer les faisceaux infrarouges dans un plan parallèle à l'écran 2 mais aussi pour éviter le contact des faisceaux infrarouges avec l'oeil humain.

Les faisceaux diffractés sont donc émis dans un plan parallèle à la surface de l'écran 2 par l'intermédiaire de lumières 30 qui peuvent être des fentes 30 adaptées à la géométrie du faisceau Fₛᵢ souhaité. Les fentes 30 sont préférentiellement réalisées dans le profilé 111 à des positions situées à la circonférence de la zone de projection 2. Les fentes 30 peuvent être symétriquement réparties selon la configuration envisagée de la répartition des lasers 37 et des diffracteurs 320 associés. Les fentes 30 peuvent, selon une variante, être toutes identiques. Selon un autre mode de réalisation, les fentes 30 peuvent avoir des géométries différentes lorsque l'on souhaite adapter la taille de la fente 30 à l'angle d'ouverture θᵢ du faisceau, si les faisceaux comportent différents angles d'ouverture θᵢ entre eux.

Selon un mode de réalisation, le bord circulaire 12 comprend un filtre optique 36. Selon un premier exemple, les filtres 36 sont superposés aux fentes 30 et fixés au bord circulaire 12. Selon un mode de réalisation, les filtres 36 sont adaptés à recouvrir chacun une fente 30 avec des proportions adéquates. Selon un autre mode de réalisation, un unique filtre 30 circulaire peut être apposé sur la circonférence intérieure du profilé 111 de sorte à recouvrir toute les fentes 30. Les filtres 36 peuvent être rendus solidaires au bord 12 par des moyens de fixation tels que des vis, scotch, colle, etc. Avantageusement, les filtres 36 permettent de protéger les yeux d'un utilisateur 21 des faisceaux lasers. Les filtres 36 peuvent apparaitre comme des surfaces noires non transparentes dans le spectre visible. Ils ont une fonction également esthétique permettant d'homogénéiser l'apparence générale de la table 1.

La nappe lumineuse 38 émise par les différents faisceaux est préférentiellement générée à une distance située entre 0,3 mm et 3 mm de la surface de l'écran 2. Selon un premier exemple, la nappe lumineuse 38 est générée à une distance sensiblement égale à 1 mm de la surface de l'écran 2. Selon un second exemple, la nappe lumineuse 38 est générée à une distance sensiblement égale à 1,5 mm de la surface de l'écran 2.

La nappe lumineuse 38 forme un plan de détection 38 suffisamment proche de la zone de projection 2 pour que l'utilisateur 21 ait la sensation et l'impression d'un toucher tactile interactif issu de son contact avec l'écran 2.

Le bâti 11 comprend un moyen de projection 330, un moyen de capture d'images 35 et un calculateur 310.

Selon un mode de réalisation, les lasers 37 infrarouges sont pulsés de sorte à émettre un faisceau Fₛᵢ pendant un premier laps de temps et à ne pas émettre de faisceau Fₛᵢ pendant un second laps de temps. Selon un mode de réalisation, la fréquence de pulsation des lasers 37 infrarouges est sensiblement égale à 30 Hz. Les lasers 37 sont pulsés avantageusement de sorte à améliorer la détection d'un obstacle tel qu'un doigt d'un utilisateur 21. L'utilisation de lasers pulsés 37 permet de traiter une partie des perturbations et du bruit ambiant provoquant des fausses détections. Le traitement comprend une élimination du « bruit » provenant de la luminosité ambiante So et permet de diminuer les risques de contact avec l'oeil humain. Le procédé d'élimination du bruit provenant de la luminosité ambiante So est décrit ci-dessous au regard de figure 5.

Selon un mode de réalisation, six lasers 37 infrarouges sont agencés symétriquement à la périphérie de l'écran 2.

### Moyen de capture d'images

Le moyen de capture d'images 35 est configuré pour acquérir une pluralité d'images de manière à générer une pluralité de premières images (I_{M1}) et de secondes images (I_{M2}) permettant la détection d'un mouvement de l'obstacle interférant avec la nappe lumineuse 38. Cela permet de détecter les mouvements d'un obstacle tel qu'une main située à proximité de l'écran 2. Selon un mode de réalisation, le moyen de capture d'images 35 est une caméra permettant de capturer des images dans la lumière visible et la lumière infrarouge. Ledit moyen de capture d'images 35 comprend un filtre infrarouge 34 de sorte que seuls les faisceaux infrarouges diffusés à travers l'écran 2 soient captés par le moyen de capture d'images 35. Ainsi, en l'absence de rayons infrarouges, l'image obtenue est noire. La diffusion des faisceaux infrarouges à travers l'écran 2 permet au moyen de capture d'images 35 de détecter un ou plusieurs points lumineux sur l'image, éventuellement des lignes ou des traces lumineuses. Lesdits points lumineux présentent des nuances de gris. Selon l'intensité du point lumineux, la trace générée dans l'image est plus ou moins blanche ou grise. L'intensité de la trace permet de déduire de la présence d'un point d'interaction 430 ou non. Un seuil d'intensité est fixé afin que les points lumineux ayant une intensité lumineuse inférieure audit seuil soient considérés comme n'étant pas un point d'interaction et les points lumineux ayant une intensité lumineuse supérieure audit seuil soient considérés comme des points d'interaction. Préférentiellement, l'acquisition d'images est réalisée dans une bande de fréquences dont les longueurs d'ondes sont comprises entre 750nm et 1000nm, par exemple 830nm. Selon un mode de réalisation, la fréquence d'acquisition des images du moyen de capture d'images 35 est supérieure ou égale à une fréquence de pulsation des émissions des faisceaux lasers puisés. Avantageusement, la fréquence de captures d'images est sensiblement égale à 60 Hz afin d'optimiser la détection des obstacles tels que la présence d'au moins un doigt interceptant la nappe lumineuse 38.

Selon un mode de réalisation, les moyens de capture d'image sont une barrière optique comprenant une pluralité de photorécepteurs. La barrière optique est alors, dans ce mode de réalisation, comprise sensiblement dans le plan d'émission du faisceau ou dans celui de l'écran. Les points d'interception du faisceau sont détectés par la détermination d'une variation de luminosité reçue par les photorécepteurs.

Dans ce dernier cas, la barrière optique est intégrée dans la bordure de la table, latéralement à l'écran. La bordure de la table peut comprendre un agencement le long de sa circonférence d'une pluralité de barrières optiques de sorte à détecter la luminosité de différents faisceaux émis par des émetteurs répartis sur la circonférence de la table.

### Moyen de projection

Selon un mode de réalisation, le moyen de projection 330 comprend un offset nul, c'est-à-dire que l'image projetée n'est pas déformée dans le plan optique perpendiculaire à son axe optique. Le moyen de projection 330 est dans ce cas avantageusement agencé de sorte à être centré sous l'écran 2. Avantageusement, le centrage du moyen de projection 330 sous la table permet d'obtenir une configuration dans laquelle l'axe optique du moyen de projection 330 est confondu avec l'axe passant par le centre de l'écran 2. Préférentiellement, le moyen de projection 330 est à champ large ce qui permet d'obtenir un faible recul vis-à-vis de l'écran 2. Par exemple, selon une configuration la table 1 de l'invention peut comprendre un moyen de projection 330 agencé sensiblement à 30 cm en dessous de la zone de projection 2. Ainsi, une variante de la table 1 interactive de l'invention peut être avantageusement une table basse ou table semi-basse dont la hauteur est sensiblement égale à 40 cm. Cette variante de table 1 permet d'obtenir une réduction de l'encombrement. Avantageusement, le moyen de projection 330 présente une résolution d'images de 1920 x 1200 pixels de sorte que l'image projetée I_{M0} soit nette pour le ou les utilisateur(s) 21 et qu'apparaissent suffisamment de détails. Ainsi, une action de zoom permet de conserver une qualité d'image raisonnable pour la lisibilité des informations affichées sur l'écran 2. Le moyen de projection 330 est préférentiellement un projecteur vidéo 330. Préférentiellement, le moyen de projection 330 comporte au moins une diode électroluminescente ou une diode laser en alternative à une solution intégrant une lampe. La lampe nécessite une maintenance plus fréquente qu'une diode. Ainsi, un moyen de projection 330 utilisant une diode est préférée et permet d'obtenir une solution moins onéreuse. Avantageusement, le moyen de projection 330 ne nécessite pas de miroir de sorte à éviter les problèmes de dérèglement du miroir, de salissures, d'effet fantôme etc.

Selon un mode de réalisation, le moyen de projection est un écran LCD, qui forme alors une zone d'affichage. Dans ce cas, une plaque de protection transparente peut être superposée à l'écran LCD. Cette plaque de protection peut servir de support pour les mouvements des doigts d'un utilisateur. Selon ce mode de réalisation, le système de détection des points d'interaction tactile de la table est superposé à la plaque transparente. Dans ce cas, lorsqu'une barrière optique est utilisée avec des émetteurs infrarouges, les faisceaux sont émis dans un plan parallèle à la plaque transparente. Les points d'interaction sont calculés à partir du traitement de la lumière infrarouge modifiée par la présence des doigts et reçue par les barrières optiques. Ce système donne la sensation à un utilisateur que c'est le contact de son doigt sur la plaque qui engage la prise en compte de ces actions.

### Calculateur

Le bâti 11 comprend en outre au moins un calculateur 310. Ce dernier est configuré pour détecter et calculer la présence d'un obstacle, tel qu'un doigt, interceptant au moins un faisceau Fₛᵢ généré par au moins un laser 37. Le calculateur 310 permet d'effectuer des comparaisons des images acquises, notamment :
▪ des opérations sur des images : soustraction ou toute autre opération de traitement d'images ;
▪ des calculs d'une intensité lumineuse par analyse des densités de pixels dans l'image ;
▪ des comparaisons de points lumineux à un seuil de luminosité.

En outre, le calculateur 310 permet notamment d'effectuer des calculs de changements de repères d'une position d'un doigt dans le plan de détection 38 à une position dans l'image projetée. Le calculateur 310 est également configuré pour générer une action sur une image en fonction de la position de l'obstacle dans l'image et de sa correspondance avec une zone interactive Zi.

Les différentes actions effectuées par le calculateur 310 peuvent alternativement être exécutées par différents calculateurs 310 selon un autre mode de réalisation.

La table tactile de l'invention permet avantageusement de mettre en oeuvre le procédé de gestion spatiale de l'invention ainsi que chaque fonction indépendamment des unes des autres ou possiblement conjointement lorsque le cas se présente. Parmi ces fonctions, on retrouve la fonction anticollision, la fonction de partage ou encore la fonction d'acceptation mutuelle.

Les composants de la table tactile de l'invention permettent de mettre en oeuvre toutes les étapes du procédé de gestion spatiale, dont notamment : le calculateur pour réaliser toutes les étapes de calculs, de détection de zones ou de points d'interaction ou encore de génération de données à afficher. Les moyens de capture d'images et de projection permettent de satisfaire aux différentes navigations et interactivité d'un utilisateur avec le contenu de la table.

En outre, la table est compatible d'une administration par le procédé d'administration détaillé ci-après selon un mode de réalisation.

### Procédé d'administration

L'invention concerne un procédé d'administration d'une table tactile 1 à distance. Un accès internet suffit pour administrer la table puisque l'administration peut se faire depuis un client web tel qu'un navigateur internet. Le procédé d'administration comprend la possibilité d'une authentification d'un administrateur qui souhaite configurer la table selon certains paramètres de configuration.

L'authentification permet à un administrateur d'accéder à un serveur web distant via une adresse URL via un réseau de communication. L'authentification peut s'effectuer conventionnellement au moyen d'un login et d'un mot de passe.

L'administrateur via l'interface web peut personnaliser des éléments graphiques tels que le fond d'écran, le design des icônes ou des motifs 22 représentant les zones d'accès.

L'administrateur peut, en outre, préconfigurer la présence d'un ensemble d'applications données selon un usage souhaité. A titre d'exemple, des applications telles que des jeux dédiés à un usage peuvent être activées, ainsi que les questions d'un quizz. Les questions sont configurables par des documents numériques éditables via l'interface web.

Cette application permet de rendre la table totalement interactive selon les cas d'usages dont notamment des séminaires ou des salons spécifiques. D'autres documents peuvent être également préconfigurés.

Une liste d'utilisateurs peut également être préétablie, ainsi qu'une attribution des utilisateurs à certaines tables tactiles. Notamment, cette possibilité est utile lorsque l'administration d'un parc de tables tactiles est envisagée.

La possibilité d'activer ou de désactiver des applications d'une table permet de personnaliser les utilisations de la table. Ces dernières configurations peuvent être réalisées par un administrateur avant que les tables ne soient livrées pour un évènement donné. Cette possibilité permet un gain de temps et une facilité d'administration d'un parc de tables. Ainsi à réception des tables, les tables sont déjà configurées.

Les tables comportent donc pour cet usage un composant d'accès à un réseau internet. Ce composant peut être sans fil de type WIFI à une box internet. Selon un autre cas de figure, ce composant réseau comprend par exemple une interface Ethernet.

L'administration de la table permet donc un paramétrage d'un ensemble de données de contextes comprenant des données décrivant un environnement graphique de l'interface de la table tactile. En outre, les données de contextes peuvent comprendre des données de cartographies accessibles sur la table tactile et/ou des documents numériques dédiés à une population donnée.

Une cartographie intégrée et préconfigurée permet, par exemple, une personnalisation de la table située à un lieu donné, tel qu'un office de tourisme. Les points d'intérêts peuvent être ainsi préconfigurés et ajoutés au besoin sur une portion de carte prédéterminée.

Les données de configuration d'une table tactile sont mémorisées après l'opération d'administration dans une mémoire de la table. La mémorisation des données d'activation et de paramétrage sont ainsi sauvegardées.

Lorsque la table est livrée, au moins un opérateur à distance peut accéder à son tour à la table pour mettre à jour une version logicielle d'une application ou du système d'exploitation. L'accès peut comprendre une authentification sécurisée.

Ainsi le procédé d'administration permet de configurer une table tactile avant son exploitation et permet une mise à jour des applications ou du systèmes d'exploitation pendant ou après une exploitation.

Selon un mode de réalisation, il est possible d'administrer un parc de tables tactiles, c'est-à-dire plusieurs tables.

## Revendications

1. Procédé de gestion spatiale d'une pluralité de zones interactives, appelées zones (Zk)_{k∈[1;N]}, sur un écran tactile (2) d'une table (1) destinée à des usages multi-utilisateurs, chacune des zones (Zi) définissant «un environnement numérique dédié » pour un utilisateur (21) et une frontière (F_{Zi}), lesdites zones (Zi)_{i∈[1;N]} s'affichant lors de l'activation d'une commande tactile et pouvant être déplacées et agrandies sur ledit écran tactile (2) par une action tactile, ledit procédé étant **caractérisé en ce qu'**il comprend :
▪ un premier mode d'interactivité (MOD1) comprenant un affichage d'au moins deux zones (Z1, Z2i) permettant aux utilisateurs (21) d'accéder individuellement à un environnement numérique dédié ;
▪ un second mode (MOD2) d'interactivité comprenant un affichage plein écran d'une zone (Z1) permettant aux utilisateurs (21) d'accéder à un même environnement numérique,
l'activation du second mode comprenant:
▪ Une détection d'une commande d'activation (DET(COM_{ACT}) du second mode d'interactivité (MOD2) dans au moins une première zone (Z1) ;
▪ Une génération (GEN(F_{A})) d'une fenêtre d'acceptation (F_{A}) sur une pluralité de secondes zones ((Z2i)_{i∈[1;N]}) ;
▪ Une détection d'un ensemble d'actions d'acceptation (A_{A}), chacune étant générée dans chaque seconde zone (Z2i) ;
▪ Un affichage plein écran de la première zone (Z1) lorsque le nombre d'actions d'acceptation (A_{A}) correspond au nombre de secondes zones ((Z2i)_{i∈[1;N]}) affichées,
le procédé comprenant lorsque le premier mode d'interactivité (MOD1) est activé une fonction d'anticollision de zones d'interactivité comportant :
• une détection d'un déplacement d'une frontière (F_{Z1}) d'au moins une zone (Z1) interceptant au moins la frontière (F_{Z2i}) d'une autre zone (Z2i) au moyen d'un calculateur (310) couplé à un moyen de capture d'image (35) ;
• une génération d'une consigne d'arrêt du déplacement de ladite frontière (F_{Z1}) assurant la non-superposition des zones (Z1, Z2i) entre elles par le calculateur (310).

2. Procédé de gestion spatiale d'une pluralité de zones interactives selon la revendication 1, **caractérisé en ce que** lorsque le second mode (MOD2) est activé, une consigne tactile de déplacement de la zone affichée engage la rotation de la zone autour du centre de l'écran.

3. Procédé de gestion spatiale d'une pluralité de zones interactives selon la revendication 2, **caractérisé en ce que** l'angle de rotation de la zone affichée en plein écran est calculé à partir d'une mesure d'un déplacement détecté d'une action tactile effectuée sur une portion de la périphérie de la table.

4. Procédé de gestion spatiale d'une pluralité de zones interactives selon l'une quelconque revendications 1 à 3, **caractérisé en ce que** l'environnement numérique dédié comprend un ensemble d'applications (APP) et/ou de documents numériques, lesdites applications ou lesdits documents numériques étant activables par une action tactile, lesdites applications (APP) produisant des ensembles de données d'intérêt s'affichant sur lesdites zones (Zk)_{k∈[1;N]}, lesdits documents numériques ou les ensembles de données d'intérêt étant appelés « documents» (DOC).

5. Procédé de gestion spatiale d'une pluralité de zones selon l'une quelconque des revendications 1 à 4, **caractérisé en ce qu'**une position de référence (POS_{REF}(Zi)) de chaque zone (Zi) sur l'écran tactile (2) est mémorisée dans une mémoire (M) lors d'un passage du premier mode d'interactivité (MOD1) au second mode d'interactivité (MOD2).

6. Procédé de gestion spatiale d'une pluralité de zones selon la revendication 5, **caractérisé en ce qu'**une fenêtre interactive (80) est affichée à chaque position de référence (POS_{REF}), ladite fenêtre interactive (80) étant générée selon la nature de l'application activée de la première zone (Z1).

7. Procédé de gestion spatiale d'une pluralité de zones selon la revendication 5, **caractérisé en ce que** chaque zone (Z1, Z2i) est affichée à chaque position de référence (POS_{REF}) lors d'un passage du second mode d'interactivité (MOD2) au premier mode d'interactivité (MOD1).

8. Procédé de gestion spatiale d'une pluralité de zones interactives selon l'une quelconque des revendications 1 à 5, **caractérisé en ce qu'**une action tactile sur un document (DOC) affiché d'une première zone (Z1) engage la génération d'un bouton dans ladite première zone (Z1), appelé bouton de partage (B_{P}), l'actionnement dudit bouton de partage (Bp) engageant une extraction d'une copie du document (DOC) de ladite première zone (Z1), ladite copie du document s'affichant sous forme d'une icône graphique (31) à une position ancrée à la périphérie (32) de la première zone (Z1) et étant solidaire des mouvements de la frontière (F_{Z1}) de ladite première zone (Z1).

9. Procédé de gestion spatiale d'une pluralité de zones interactives selon la revendication 8, **caractérisé en ce qu'**une action tactile sur une icône graphique (31), correspondante à un document (DOC) extrait, détectée par le moyen de capture d'images (35) couplé au calculateur (110), engage :
▪ soit un affichage du document (DOC) extrait sur au moins une autre zone (Z2i) affichée ;
▪ soit un affichage du document (DOC) sur une portion neutre (P_{N}) de l'écran tactile (2), ladite portion neutre étant située dans un espace de l'écran ne comprenant pas l'affichage de zones (Z1, Z2i).

10. Procédé de gestion spatiale d'une pluralité de zones interactives selon l'une quelconque des revendications 8 à 9, **caractérisé en ce qu'**une action tactile sur le document (DOC) affiché sur une portion neutre (P_{N}) de l'écran tactile (2) génère un bouton de partage (B_{P}) du document (DOC) permettant :
▪ Soit de transférer ledit document (DOC) dans au moins une zone (Z2i) affichée ;
▪ Soit d'effectuer une copie du document (DOC) affiché dans une portion neutre (P_{N}) dans une zone interactive (Zi).

11. Procédé de gestion spatiale d'une pluralité de zones interactives selon l'une quelconque des revendications 1 à 10, **caractérisé en ce que** la détection d'une action tactile comprend un agrandissement, un déplacement, une fermeture ou un rétrécissement d'au moins une zone (Zi).

12. Procédé de gestion spatiale d'une pluralité de zones interactives selon l'une quelconque des revendications 1 à 11, **caractérisé en ce que** l'ensemble des actions générées sont réalisées suite à :
▪ au moins un toucher tactile à la surface de l'écran (2) ou ;
▪ une combinaison de toucher dans un espace de temps donné ou ;
▪ un déplacement d'au moins un toucher sur la surface de l'écran.

13. Procédé de gestion spatiale d'une pluralité de zones interactives selon l'une quelconque des revendications 1 à 12, **caractérisé en ce que** l'écran tactile (2) et les zones interactives (Z1, Z2i) sont circulaires ou rectangulaires ou carrés.

14. Table tactile (1) circulaire comprenant un écran (2), un moyen de projection (330) affichant au moins un contenu multimédia sur ledit écran, des moyens d'émission (37) d'un faisceau lumineux projeté dans un plan parallèle à l'écran (2) permettant d'intercepter des points d'interactions, un calculateur (110) et un moyen de capture d'images (35) permettant de détecter les positions de points d'interaction, **caractérisé en ce qu'**elle met en oeuvre le procédé de gestion spatiale d'une pluralité de zones interactives selon l'une quelconque des revendications 1 à 13.

## Patentansprüche

1. Räumliches Verwaltungsverfahren einer Vielzahl von interaktiven Bereichen, bezeichnet als Bereiche (Zk)_{k€[1;N]}, auf einem berührungssensitivem Bildschirm (2) eines Tisches (1), der für Multi-User-Nutzungen bestimmt ist, wobei jeder der Bereiche (Zi) eine "dedizierte digitale Umgebung" für einen Nutzer (21) und eine Grenze (F_{zi}) definiert, wobei die genannten Bereiche (Zi)_{i€[1;N]} bei der Aktivierung eines taktilen Befehls angezeigt werden und durch eine taktile Aktion auf dem genannten berührungssensitiven Bildschirm verschoben und vergrößert werden können, wobei das genannte Verfahren **dadurch gekennzeichnet ist, dass** es umfasst:
▪ einen ersten Interaktivitätsmodus (MOD1), umfassend eine Anzeige von wenigstens zwei Bereichen (Z1, Z2i), die den Nutzern (21) den individuellen Zugriff auf eine dedizierte digitale Umgebung erlauben;
▪ einen zweiten Interaktivitätsmodus (MOD2), umfassend eine Vollbildanzeige eines Bereichs (Z1), der den Nutzern (21) den Zugang zu einer und derselben digitalen Umgebung erlaubt,
die Aktivierung des zweiten Modus, umfassend:
▪ eine Detektion eines Aktivierungsbefehls (DET(COM_{ACT)}) des zweiten Interaktivitätsmodus (MOD2) in wenigstens einem ersten Bereich (Z1);
▪ ein Generieren (GEN(F_{A})) eines Annahmefensters (F_{A}) auf einer Vielzahl von zweiten Bereichen ((Z2i)_{i€[1;N]});
▪ eine Detektion einer Gruppe von Annahmeaktionen (A_{A}), wobei jede in jedem zweiten Bereich (Z2i) generiert ist;
▪ eine Vollbildanzeige des ersten Bereichs (Z1), wenn die Anzahl der Annahmeaktionen (A_{A}) der Anzahl der zweiten, angezeigten Bereiche ((Z2i)_{i€[1;N]}) entspricht,
wobei das Verfahren, wenn der erste Interaktivitätsmodus (MOD1) aktiviert ist, eine Antikollisionsfunktion aus Interaktivitätsbereichen umfasst, umfassend:
▪ eine Detektion einer Verschiebung einer Grenze (F_{Z1}) wenigstens eines Bereichs (Z1), der wenigstens die Grenze (F_{Z2i}) eines anderen Bereichs (Z2i) mittels eines Rechners (310), der an ein Bilderfassungsmittel (35) gekoppelt ist, abfängt;
▪ eine Generierung eines Abschalt-Sollwertes der Verschiebung der genannten Grenze (F_{Z1}), die die Nicht-Überlagerung der Bereiche (Z1, Z2i) untereinander durch den Rechner (310) gewährleistet.

2. Räumliches Verwaltungsverfahren einer Vielzahl von interaktiven Bereichen gemäß Anspruch 1, **dadurch gekennzeichnet, dass**, wenn der zweite Modus (MOD2) aktiviert ist, ein taktiler Verschiebungs-Sollwert des angezeigten Bereichs die Rotation des Bereichs um das Zentrum des Bildschirms initiiert.

3. Räumliches Verwaltungsverfahren einer Vielzahl von interaktiven Bereichen gemäß Anspruch 2, **dadurch gekennzeichnet, dass** der Rotationswinkel des als Vollbild angezeigten Bereichs ausgehend von einer Messung einer detektierten Verschiebung einer taktilen Aktion berechnet ist, die auf einem Abschnitt des Umfangs des Tisches ausgeführt ist.

4. Räumliches Verwaltungsverfahren einer Vielzahl von interaktiven Bereichen gemäß irgendeinem der Ansprüche 1 bis 3, **dadurch gekennzeichnet, dass** die dedizierte digitale Umgebung eine Anwendungsgruppe (APP) und / oder digitale Dokumente umfasst, wobei die genannten Anwendungen oder die genannten digitalen Dokumente durch eine taktile Aktion aktivierbar sind, wobei die genannten Anwendungen (APP) Gruppen von betrachteten Daten produzieren, die auf den genannten Bereichen (ZK)_{k€[1;N]} angezeigt werden, wobei die genannten digitalen Dokumente oder die Gruppen von betrachteten Daten als "Dokumente" (DOC) bezeichnet werden.

5. Räumliches Verwaltungsverfahren einer Vielzahl von Bereichen gemäß irgendeinem der Ansprüche 1 bis 4, **dadurch gekennzeichnet, dass** eine Referenzposition (POS_{REF}(Zi)) jedes Bereichs (Zi) auf dem berührungssensitiven Bildschirm (2) in einem Speicher (M) bei einem Übergang des ersten Interaktivitätsmodus (MOD1) zum zweiten Interaktivitätsmodus (MOD2) abgespeichert wird.

6. Räumliches Verwaltungsverfahren einer Vielzahl von Bereichen gemäß Anspruch 5, **dadurch gekennzeichnet, dass** ein interaktives Fenster (80) bei jeder Referenzposition (POS_{REF}) angezeigt wird, wobei das genannte interaktive Fenster (80) gemäß der Art der aktivierten Anwendung des ersten Bereichs (Z1) generiert wird.

7. Räumliches Verwaltungsverfahren einer Vielzahl von Bereichen gemäß Anspruch 5, **dadurch gekennzeichnet, dass** jeder Bereich (Z1, Z2i) in jeder Referenzposition (POS_{REF}) bei einem Übergang vom zweiten Interaktivitätsmodus (MOD2) zum ersten Interaktivitätsmodus (MOD1) angezeigt wird.

8. Räumliches Verwaltungsverfahren einer Vielzahl von interaktiven Bereichen gemäß irgendeinem der Ansprüche 1 bis 5, **dadurch gekennzeichnet, dass** eine taktile Aktion auf einem angezeigten Dokument (DOC) eines ersten Bereichs (Z1) das Generieren einer Taste in dem genannten ersten Bereich (Z1), bezeichnet als Teiltaste (B_{P}), initiiert, wobei die Betätigung der genannten Teiltaste (B_{P}) eine Extraktion einer Kopie des Dokuments (DOC) des genannten ersten Bereichs (Z1) initiiert, wobei die genannte Kopie des Dokuments in Form eines graphischen Icons (31) in einer Position angezeigt wird, die am Umfang (32) des ersten Bereichs (Z1) verankert ist und mit Bewegungen der Grenze (F_{Z1}) des genannten ersten Bereichs (Z1) fest verbunden ist.

9. Räumliches Verwaltungsverfahren einer Vielzahl von interaktiven Bereichen gemäß Anspruch 8, **dadurch gekennzeichnet, dass** die taktile Aktion auf einem graphischen Icon (31), das einem extrahierten Dokument (DOC) entspricht und von dem an den Rechner (110) gekoppelten Bilderfassungsmittel (35) detektiert wird, initiiert:
▪ entweder eine Anzeige des extrahierten Dokuments (DOC) in wenigstens einem anderen angezeigten Bereich (Z2i);
▪ oder eine Anzeige des Dokuments (DOC) in einem neutralen Abschnitt (P_{N}) des berührungssensitiven Bildschirms (2), wobei der genannte neutrale Abschnitt in einem Raum des Bildschirms angeordnet ist, der die Anzeige der Bereiche (Z1, Z2) nicht umfasst.

10. Räumliches Verwaltungsverfahren einer Vielzahl von interaktiven Bereichen gemäß irgendeinem der Ansprüche 8 bis 9, **dadurch gekennzeichnet, dass** eine taktile Aktion auf dem in einem neutralen Abschnitt (P_{N}) des berührungssensitiven Bildschirms (2) angezeigten Dokument (DOC) eine Teiltaste (B_{P}) des Dokuments (DOC) generiert, die erlaubt:
▪ entweder die Übertragung des genannten Dokuments (DOC) auf wenigstens einen angezeigten Bereich (Z2i);
▪ oder das Anlegen einer Kopie des in einem neutralen Abschnitt (P_{N}) angezeigten Dokuments (DOC) in einen interaktiven Bereich (Zi).

11. Räumliches Verwaltungsverfahren einer Vielzahl von interaktiven Bereichen gemäß irgendeinem der Ansprüche 1 bis 10, **dadurch gekennzeichnet, dass** die Detektion einer taktilen Aktion eine Vergrößerung, eine Verschiebung, ein Verschließen oder ein Verkleinern wenigstens eines Bereichs (Zi) umfasst.

12. Räumliches Verwaltungsverfahren einer Vielzahl von interaktiven Bereichen gemäß irgendeinem der Ansprüche 1 bis 11, **dadurch gekennzeichnet, dass** die Gruppe der generierten Aktionen realisiert wird im Anschluss an:
▪ wenigstens eine taktile Berührung an der Oberfläche des Bildschirms (2) oder;
▪ eine Kombination von Berührungen in einem bestimmten Zeitraum oder;
▪ eine Verschiebung von wenigstens einer Berührung auf der Oberfläche des Bildschirms.

13. Räumliches Verwaltungsverfahren einer Vielzahl von interaktiven Bereichen gemäß irgendeinem der Ansprüche 1 bis 12, **dadurch gekennzeichnet, dass** der berührungssensitive Bildschirm (2) und die interaktiven Bereiche (Z1, Z2i) kreisrund oder rechteckig oder quadratisch sind.

14. Kreisrunder berührungssensitiver Tisch (1), umfassend einen Bildschirm (2), ein Projektionsmittel (330), das wenigstens einen Multimedia-Inhalt auf dem genannten Bildschirm anzeigt, Ausgabemittel (37) eines Lichtbündels, das in einer zum Bildschirm (2) parallelen Ebene projiziert wird und das Abfangen der Interaktionspunkte erlaubt, einen Rechner (110) und ein Bilderfassungsmittel (35), das die Detektion der Positionen von Interaktionspunkten erlaubt, **dadurch gekennzeichnet, dass** es das räumliche Verwaltungsverfahren einer Vielzahl von interaktiven Bereichen gemäß irgendeinem der Ansprüche 1 bis 13 umsetzt.

## Claims

1. A method for spatially managing a plurality of interactive zones, referred to as zones (Zk)_{k∈[1;N]}, on a tactile screen (2) of a table (1) intended for multi-user purposes, each of the zones (Zi) defining "a dedicated digital environment" for a user (21) and a boundary (F_{zi}), said zones (Zi)_{i∈[1;N]} being displayed upon activating a tactile control and being able to be displaced and enlarged on said tactile screen (2) by a tactile action, said method being **characterized in that** it comprises:
▪ a first interactivity mode (MOD1) comprising a display of at least two zones (Z1, Z2i) enabling users (21) to individually access a dedicated digital environment;
▪ a second interactivity mode (MOD2) comprising a full screen display of a zone (Z1) enabling users (21) to access a same digital environment,
activating the second mode comprising:
▪ detecting an activation control (DET(COM_{ACT}) of the second interactivity mode (MOD2) in at least one first zone (ZI);
▪ generating (GEN(F_{A})) an acceptance window (F_{A}) on a plurality of second zones ((Z2i)_{i∈[1;N]});
▪ detecting a set of acceptance actions (A_{A}), each being generated in each second zone (Z2i);
▪ full screen displaying the first zone(Z1) when the number of acceptance actions (A_{A}) corresponds to the number of second displayed zones ((Z2i)_{i∈[1;N]}),
the method comprising when the first interactivity mode (MOD1) is activated an anti-collision function of interactivity zones including:
• detecting a displacement of a boundary (F_{Z1}) of at least one zone (Z1) intercepting at least the boundary (F_{Z2i}) of another zone (Z2i) by means of a calculator (310) coupled with an image capture means (35);
• generating, by the calculator (310), a setpoint for stopping the displacement of said boundary (F_{Z1}) ensuring that the zones (Z1, Z2i) are not superimposed with each other.

2. The method for spatially managing a plurality of interactive zones according to claim 1, **characterized in that** when the second mode (MOD2) is activated, a touch setpoint for displacing the displayed zone initiates rotating the zone around the centre of the screen.

3. The method for spatially managing a plurality of interactive zones according to claim 2, **characterized in that** the rotation angle of the full screen displayed zone is calculated from a measurement of a detected displacement of a tactile action performed on a portion of the table periphery.

4. The method for spatially managing a plurality of interactive zones according to any of claims 1 to 3, **characterized in that** the dedicated digital environment comprises a set of applications (APP) and/or digital documents, said applications or said digital documents being activatable by a tactile action, said applications (APP) yielding sets of data of interest being displayed on said zones (Zk)_{k∈[1;N]}, said digital documents or the sets of data of interest being referred to as "documents" (DOC).

5. The method for spatially managing a plurality of zones according to any of claims 1 to 4, **characterized in that** a reference position (POS_{REF}(Zi)) of each zone (Zi) on the tactile screen (2) is stored in a memory (M) when switching from the first interactivity mode (MOD1) to the second interactivity mode (MOD2).

6. The method for spatially managing a plurality of zones according to claim 5, **characterized in that** an interactive window (80) is displayed at each reference position (POS_{REF}), said interactive window (80) being generated according to the nature of the activated application of the first zone (Z1).

7. The method for spatially managing a plurality of zones according to claim 5, **characterized in that** each zone (Z1, Z2i) is displayed at each reference position (POS_{REF}) when switching from the second interactivity mode (MOD2) to the first interactivity mode (MOD1).

8. The method for spatially managing a plurality of interactive zones according to any of claims 1 to 5, **characterized in that** a tactile action on a displayed document (DOC) of a first zone (Z1) initiates generating a button in said first zone (Z1), referred to as a sharing button (B_{P}), actuating said sharing button (Bp) starting extracting a copy of the document (DOC) of said first zone (Z1), said copy of the document being displayed as a graphic icon (31) at a position anchored at the periphery (32) of the first zone (Z1) and being integral with the movements of the boundary (F_{Z1}) of said first zone (Z1).

9. The method for spatially managing a plurality of interactive zones according to claim 8, **characterized in that** a tactile action on a graphic icon (31), corresponding to an extracted document (DOC), detected by the image capture means (35) coupled with the calculator (110), initiates:
▪ either displaying the extracted document (DOC) on at least one other displayed zone (Z2i);
▪ or displaying the document (DOC) on a neutral portion (P_{N}) of the tactile screen (2), said neutral portion being located in a space of the screen not comprising the display of zones (Z1, Z2i).

10. The method for spatially managing a plurality of interactive zones according to any of claims 8 to 9, **characterized in that** a tactile action on the document (DOC) displayed on a neutral portion (P_{N}) of the tactile screen (2) generates a sharing button (B_{P}) of the document (DOC) enabling:
▪ either said document (DOC) to be transferred in at least one displayed zone (Z2i);
▪ or a copy of the displayed document (DOC) to be made in a neutral portion (P_{N}) in an interactive zone (Zi).

11. The method for spatially managing a plurality of interactive zones according to any of claims 1 to 10, **characterized in that** detecting a tactile action comprises enlarging, displacing, closing or narrowing at least one zone (Zi).

12. The method for spatially managing a plurality of interactive zones according to any of claims 1 to 11, **characterized in that** on the generated actions are performed as a result of:
▪ at least one tactile touch at the surface of the screen (2) or;
▪ a combination of touch in a given time space or;
▪ a displacement of at least one touch on the surface of the screen.

13. The method for spatially managing a plurality of interactive zones according to any of claims 1 to 12, **characterized in that** the tactile screen (2) and the interactive zones (Z1, Z2i) are circular or rectangular or square.

14. A circular tactile table (1) comprising a screen (2), a projecting means (330) displaying at least one media content on said screen, means for emitting (37) a light beam projected in a plane parallel to the screen (2) enabling interaction points to be intercepted, a calculator (110) and an image capture means (35) enabling the positions of the interaction points to be detected, **characterized in that** it implements the method for spatially managing a plurality of interactive zones according to any of claims 1 to 13.
